Europäisches Patentamt

(19) European Patent Office

Office européen des brevets

(11) Numéro de publication : **0 133 825**
**B1**

(12) **FASCICULE DE BREVET EUROPÉEN**

(45) Date de publication du fascicule du brevet :
09.09.87

(21) Numéro de dépôt : **84401239.3**

(22) Date de dépôt : **15.06.84**

(51) Int. Cl.⁴ : **B 29 B 11/16, B 29 C 67/12,**
**B 29 C 47/02**

(54) Matériau composite souple et son procédé de fabrication.

(30) Priorité : 28.06.83 FR 8310632
10.04.84 FR 8405627

(43) Date de publication de la demande :
06.03.85 Bulletin 85/10

(45) Mention de la délivrance du brevet :
09.09.87 Bulletin 87/37

(84) Etats contractants désignés :
AT BE CH DE FR GB IT LI LU NL SE

(56) Documents cités :
DE-B- 1 049 455
FR-A- 2 516 441
US-A- 2 806 248
US-A- 3 540 203

(73) Titulaire : ATOCHEM
4 & 8, Cours Michelet La Défense 10
F-92800 Puteaux (FR)

(72) Inventeur : Ganga, Roland Alexandre
42 bis Ile FANAC
F-94340 Joinville Le Pont (FR)

Jouve, 18, rue St-Denis, 75001 Paris, France

## Description

La présente invention se rapporte à un matériau composite constitué d'une gaine souple recouvrant une mèche de fibres continues de toute nature, minérales, organiques ou métalliques imprégnées à cœur de poudre de matières thermoplastiques de point de fusion supérieur ou égal à celui de la gaine souple.

Le matériau composite selon l'invention est principalement caractérisé par sa souplesse. Il est connu du brevet français 2 516 441 d'imprégner à cœur de poudres de matières thermoplastiques des mèches de fibres puis de conformer à chaud l'ensemble. Dans ces conditions on obtient un matériau thermoplastique homogène armé de fibres. Un tel matériau conserve pratiquement la souplesse du thermoplastique d'origine, mais, en fonction de son épaisseur, on aboutit vite à un produit rigide. En outre, les fibres noyées dans le thermoplastique deviennent cassantes à la moindre flexion du matériau.

Cette rigidité et cette fragilisation des fibres se révèlent rédhibitoires dans certaines applications dans lesquelles par exemple le composite doit être enroulé autour de pièces de faible rayon de courbure comme on en trouve dans l'industrie automobile, ou encore dans lesquelles on souhaite conserver l'uniformité de la fibre comme par exemple le gainage de fibres optiques ou conductrices.

Le matériau composite selon l'invention permet de remédier à ces inconvénients. Il comprend une mèche de fibres continues enrobée de résine thermoplastique caractérisé en ce qu'il est constitué d'une gaine souple en matière thermoplastique recouvrant la mèche de fibres imprégnées de poudres de matières thermoplastiques dont le point de fusion est supérieur ou égal à celui de la gaine souple.

L'invention concerne également le procédé permettant d'obtenir ce matériau composite.

L'intérêt de ce matériau est de supprimer l'homogénéité entre les fibres et la gaine. Ce matériau peut posséder une gaine très fine conservant toute sa souplesse, les fibres, isolées de la gaine par la poudre d'enrobage, et sous contrainte réduite, conservant leurs propres caractéristiques à l'intérieur de la gaine.

Dans le procédé visé par l'invention, on imprègne de particules de poudre de matière thermoplastique une mèche de fibres continues parallèles, c'est-à-dire non torsadées, en profitant d'un épanouissement momentané de ces fibres, par immersion desdites fibres dans un lit fluidisé de particules de poudre. Ces particules de poudre se groupent autour de chaque fibre individuelle de la mèche du fait des charges électrostatiques développées par des procédés connus (généralement électrostatiques, balais ou galets frotteurs, etc.).

Par réunion de ces fibres individuelles chargées de poudre fine de matière thermoplastique on se trouve en présence d'une mèche de fibres parallèles imprégnées à cœur de poudre fine et garnie également sur la périphérie d'une couche de la même poudre fine.

Cette mèche chargée de poudre fine thermoplastique reçoit alors par extrusion, enduction à partir d'une solution ou d'une dispersion une enveloppe extérieure continue thermoplastique, laissant les grains de poudre libres de jouer avec les fibres à l'intérieur d'elle-même.

En résumé le procédé de fabrication du matériau composite selon l'invention consistant à enrober une mèche de fibres continues d'une poudre de résines thermoplastiques est caractérisé en ce qu'on gaine l'ensemble d'une matière thermoplastique dont le point de fusion est inférieur ou égal à celui de la poudre de matière thermoplastique d'enrobage.

Grâce à ce procédé, il est possible d'obtenir des matériaux composites restant souples, pouvant être pliés et même noués sans casser. Ces matériaux composites souples peuvent ainsi se prêter à des opérations de tressage, tissage et même tricotage, ouvrant de grandes possibilités à l'emploi de ce matériau, inaccessibles aux matériaux de l'art antérieur du fait de leur fragilité au pliage, comme il a été dit plus haut.

Il est possible d'obtenir des matériaux composites souples présentant un taux de fibres de renforcement atteignant 50 % en volume et 70 % en poids.

Les fibres de renforcement peuvent être des fibres de verre de titre compris de préférence entre 160 et 320 tex pour recouvrement par des polymères courants tels que cités ci-après.

Des fibres de titre compris entre 1 200 et 2 400 tex ont été employées pour recouvrement par des polymères de très haute fluidité cités également ci-après.

D'autres fibres sont de la famille des aramides (superpolyamides à base aromatique) tels que les KEVLAR. Un titre préféré est, par exemple, celui de 1 580 décitex. Le recouvrement peut s'effectuer avec les mêmes types de polymères que pour les fibres de verre.

Enfin, on peut employer des fibres de carbone, dont le titre est exprimé en filaments (ou plus pratiquement en kilofilaments). C'est ainsi que des titres compris dans la fourchette de 3 à 12 kilofilaments sont les plus appropriés à la réalisation de matériaux composites souples selon l'invention.

Les résines en poudre fine introduites au cœur de la mèche de fibres continues convenant bien pour la mise en œuvre de l'invention sont les poudres de polyamides c'est-à-dire les polymères obtenus par polycondensation de lactames (caprolactame, lauryllactame etc.) ou aminoacides tels que le sel de l'acide adipique et de l'hexaméthylènediamine, l'acide aminoundécanoïque, les copolymères polyamidiques etc.

Mais il est bien entendu que d'autres poudres de matières thermoplastiques peuvent être mises en œuvre telles que poudres de polypropylène, de polyéthylène, de PVC, de polyesters homopolymères et copolymères, le polyfluorure de vinylidène etc.

2

Le recouvrement des mèches continues chargées de poudre fine qui est une caractéristique de l'invention est tel qu'il s'opère sans porter à la fusion les particules de poudre fine imprégnant la mèche.

Il utilise soit des résines à plus bas point de fusion que celui de la poudre, telles que le terpolymère 6/6.6/12 dont le point de fusion est de 105 °C, soit des résines de même nature que la poudre, mais seulement de fluidité à l'état fondu plus élevée, ceci pour satisfaire aux exigences du recouvrement par extrusion.

Ce sont par exemple des polyamides 6, 11 et 12, du polypropylène, des polyéthylènes, du PVDF, des polyesters.

Dans une variante du procédé selon l'invention, l'imprégnation de la mèche épanouie par la poudre fine est obtenue en traversant un bain d'une dispersion aqueuse ou organique de poudre fine telle que décrite dans le brevet français de la demanderesse n° 81 03528, suivie d'un séchage.

On peut, dans une autre variante, enrober la mèche contenant les grains de poudre par l'un ou l'autre des procédés suivants, sans sortir du cadre de l'invention :

— soit en la faisant passer dans un fondoir contenant la matière de gainage à l'état fondu,

— soit en la faisant passer successivement dans un premier bain liquide d'un monomère ou oligomère et, ensuite, dans un deuxième bain également liquide d'un monomère ou oligomère réagissant avec le premier pour donner une matière thermoplastique, les couples utilisés pouvant être :

polyols-polyisocyanates, conduisant à des polyuréthannes ou polyuréthannes-polyurées,

résines époxy avec durcisseur,

résines époxy-polymères dicarboxyliques etc.

Un dispositif permettant de réaliser pratiquement l'objet de l'invention qui est un matériau composite souple contenant des mèches de fibres continues imprégnées à cœur de poudre fine thermoplastique sans que ces particules de poudre fine aient été portées à la fusion est décrit ci-après. Il est, bien entendu, donné à titre d'exemple non limitatif. Dans cette description on se réfère aux dessins ci-joints qui montrent :

Figure 1    une vue en élévation et en coupe d'un mode de réalisation.

Figure 2    une vue en coupe de la filière de recouvrement.

Figure 3    une vue en coupe d'un objet fabriqué selon l'invention et monté sur un banc d'essai d'éclatement.

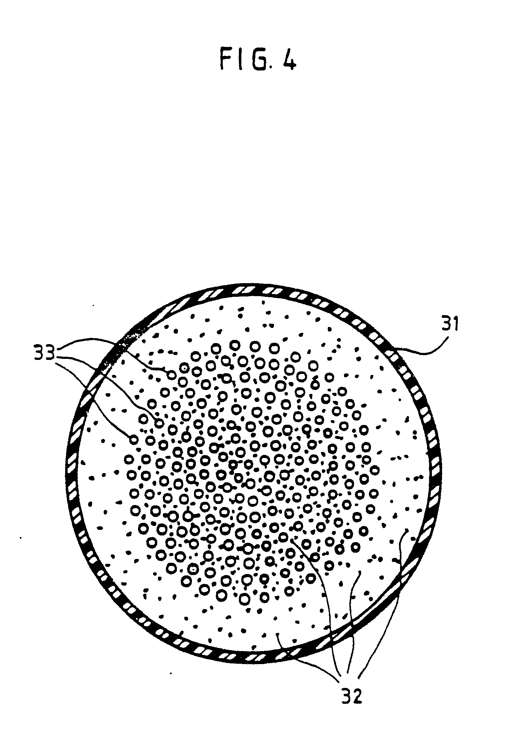

Par ailleurs la Fig. 4 présente une vue en coupe d'un profilé souple objet de l'invention.

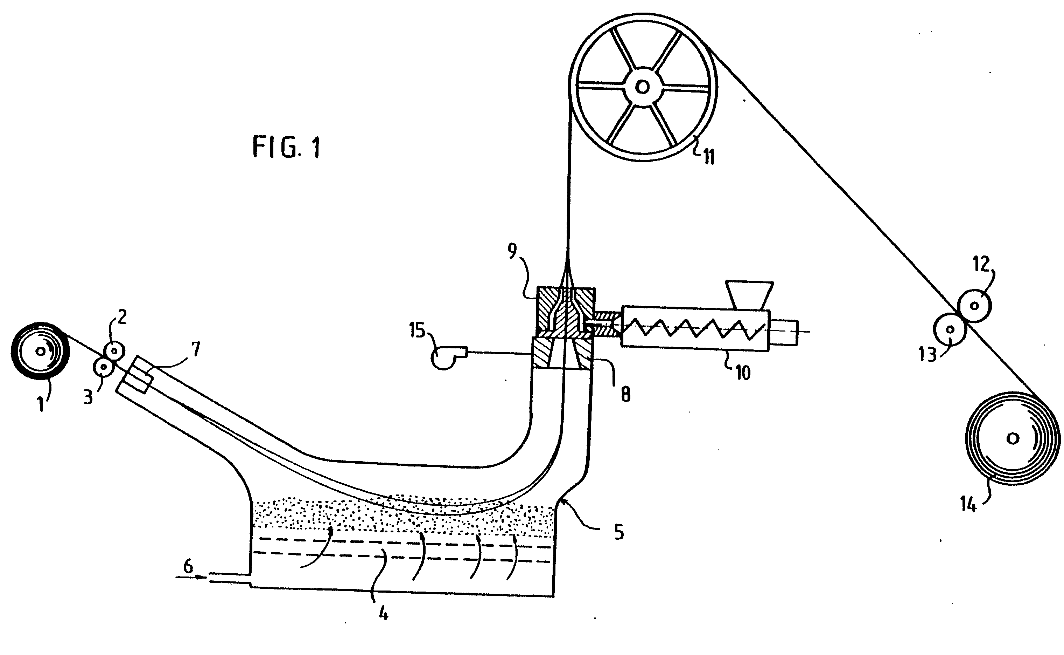

Le procédé d'obtention du matériau composite souple selon l'invention fonctionne pratiquement comme on peut le voir sur la Fig. 1 :

En (1) la mèche continue de fibres se déroule du dévidoir sous la traction engendrée par le duo de cylindres d'appel 2, 3. La mèche pénètre par un sas étanche (7) dans une cuve de fluidisation entièrement fermée (4) où sous l'action d'air comprimé (6) admis dans le caisson inférieur de la poudre fine thermoplastique (5) est mise en état de fluidisation. La mèche est épanouie ou défibrée par des moyens connus tels que galets ou cylindres cannelés. Elle se charge électrostatiquement par frottement sur ces organes puis, garnie de poudre fine, se rend à la sortie de la cuve de fluidisation qui est un second sas étanche (8).

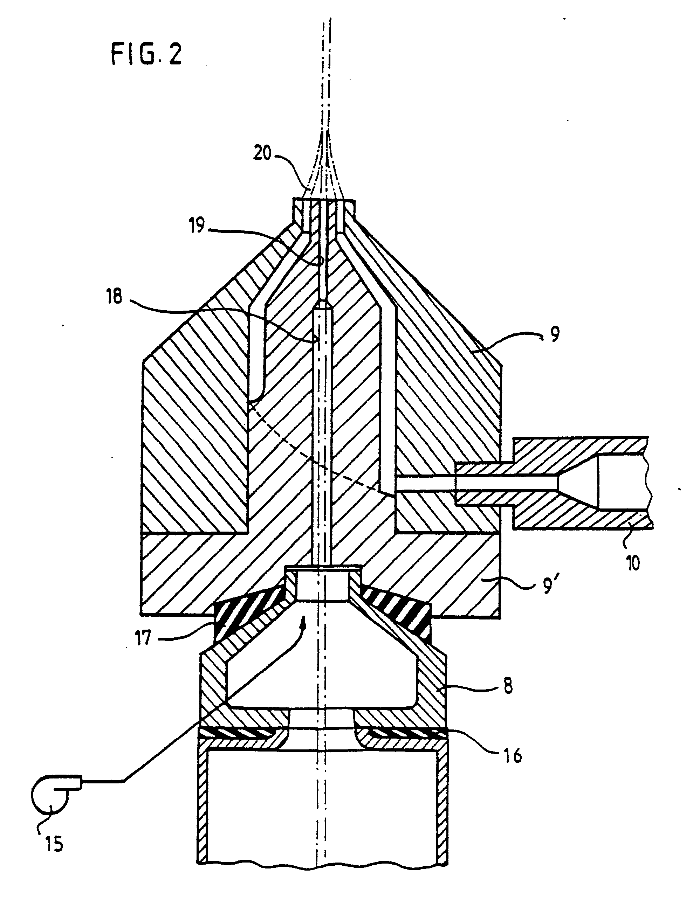

Ce sas (8) présente la particularité d'être monté à la fois sur la cuve de fluidisation et sur la tête d'équerre de recouvrement (9) par l'intermédiaire de deux joints thermiques (16) et (17), visibles sur la Fig. 2. Ces joints réduisent au maximum les échanges thermiques entre le sas (8) et d'une part la tête d'équerre de recouvrement (9), qui est une source de génération de chaleur du fait de son chauffage positif (non représenté) et d'autre part l'extrémité de la cuve de fluidisation (4). Cette isolation thermique sert à éviter la gélification de poudre au contact des surfaces chaudes sur lesquelles elle pourrait fondre. Suivant une réalisation préférée de l'installation, l'isolant (16) est usiné dans une plaque de PTFE « Téflon » et l'isolant (17) est fritté à partir de poudre d'oxyde de zirconium.

L'étanchéité des raccordements cuve de fluidisation 4/sas 8/tête d'équerre (9) est destinée à éviter que des particules de poudre ne s'échappent à l'extérieur de l'installation et ne provoquent des accidents par inflammation.

Pour compléter l'action de refoulement vers la cuve de toute particule de poudre fine non fixée par charge électrostatique sur la mèche, un léger courant d'air est généré dans le sas (8) par une pompe à faible débit (15). Cette pompe est du type des pompes à galets de laboratoire telles qu'en fournissent les Ets. W. Bachofen à Bâle. Les pressions d'air que ces pompes sont capables de fournir sont comprises dans la fourchette de 0,10 à 0,30 bar et leur débit peut être rendu aussi faible que possible pour la génération d'un courant dit « bulle à bulle » par réduction de la vitesse de rotation du rotor à galets dont elles sont équipées et qui produit le déplacement de l'air dans un conduit souple écrasé par ledit rotor à galets.

Des petits cyclones, non représentés pour ne pas charger la Fig. 1, permettent de laisser s'échapper l'excès d'air introduit par la pompe (15) et de récupérer les petites quantités de poudre entraînée.

A la sortie du sas (8), la mèche garnie de poudre fine pénètre dans la tête (9, 9').

Il a été trouvé avantageux de munir le passage guide-fil (19) d'une entrée élargie (18), de façon à éviter la gélification de la poudre par fusion lors du contact prolongé avec le métal de la tête d'équerre (9, 9').

Il a été trouvé avantageux de donner au conduit d'entrée (18) d'une section comprise entre 1,5 fois et 3 fois la section habituelle donnée au guide-fil dans la technique de recouvrement de câbles électriques et téléphoniques de section correspondant à celle de la mèche.

La tête d'équerre (9, 9') est approvisionnée en matière plastique de gainage par l'extrudeuse (10) représentée par son corps de jonction avec la tête. La matière plastique de gainage sort de la tête sous une forme dite « en tubant », c'est-à-dire que le diamètre de sortie de la gaine plastique est défini par un poinçon de diamètre plus fort que le diamètre extérieur de la mèche, et que la gaine de matière fondue se rétrécit du fait de la traction sur le profilé émergeant de la filière et vient au contact de la mèche après un parcours dans l'air de 5 mm environ.

Cette tête de recouvrement est avantageusement disposée avec un axe vertical. Le profilé est pratiquement froid après un parcours dans l'air d'un mètre environ. Il reste souple et passe sur une poulie à gorge (11) d'un diamètre de 600 mm environ.

Il est constitué d'un gainage souple (31) recouvrant une mèche de fibres (33) imprégnée de poudre thermoplastique (32) ainsi qu'on peut le voir dans la figure 4.

Exemple 1

Un recouvrement par extrusion d'une mèche (Rowing) de 320 tex, chargée d'une poudre fine orgasol 1002 produite par la demanderesse, est réalisé avec pour résine de gainage le Rilsan AMNO de la demanderesse.

Les caractéristiques des produits sont les suivantes :

Poudre fine = polyamide 6
        densité apparente = 0,50
        Melt Index compris entre 20 et 60 [1]
Gaine = polyamide 12
        densité = 1,5
        Melt Index compris entre 10 et 40 [2]

[1] mesuré à 235 °C avec poids de 1 kg
[2] mesuré à 190 °C avec poids de 2 kg.

Fibre de verre = densité 2,40
Extrudeuse Maillefer 30
Tête de recouvrement du type « en tubant »
Diamètre de filière = 3,5 mm
Diamètre du poinçon = 2,9 mm
Diamètre du guide-fil = 1,5 mm
Diamètre d'entrée = 2,4 mm
Température filière = 195 °C
Vitesse de tirage = 100 m/mn

Le profilé souple obtenu répond à l'analyse suivante :

| : | : | Fibres verre | : Poudre fine | : Gaine | : |
|---|---|---|---|---|---|
| : Pourcentages en poids | : | 75 | : 11 | : 14 | : |
| : Pourcentage en volume | : | 47 | : 33 | : 20 | : |

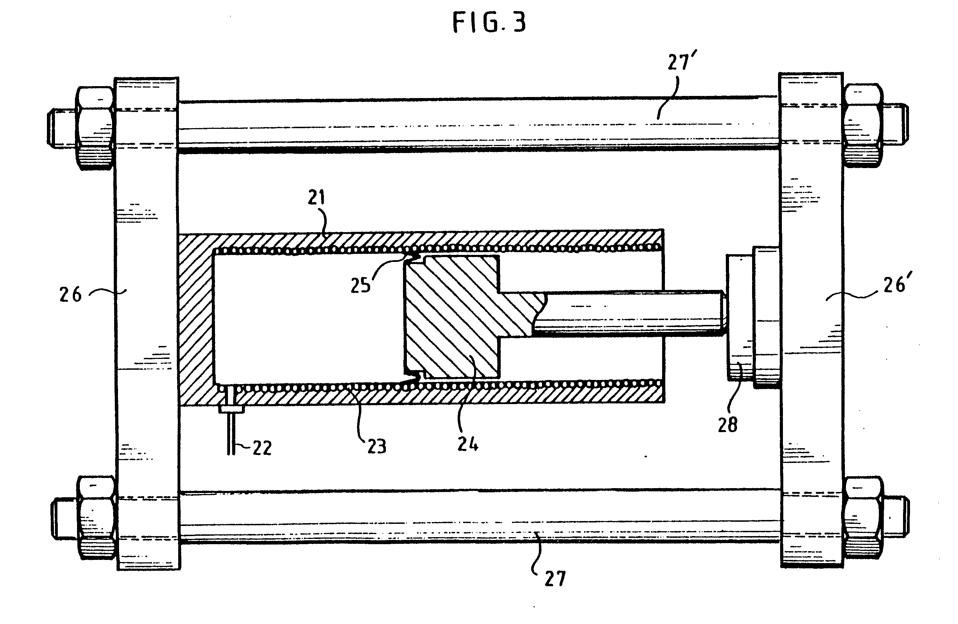

Exemple 2 (figure n° 3)

On utilise un matériau composite selon l'invention pour renforcer des pièces moulées par injection en matière plastique et destinées à travailler avec une surpression interne, telles que des corps de vérins.

Une telle pièce est par exemple constituée par un cylindre muni d'un fond, d'une longueur de 100 mm, d'un alésage de 16 mm et d'une épaisseur de paroi de 4 mm.

Cette pièce peut être réalisée suivant l'un des quatre modes ci-après, afin de permettre des essais comparatifs :

I — Pièce réalisée par injection en utilisant le polyamide 11 allié à la fibre de verre courte (RILSAN ZMO de la demanderesse).

II — Pièce réalisée avec le même moule et la même matière plastique que dans l'essai I, mais après mise en place sur le noyau du moule avant l'opération d'injection d'une couche unique (23) du matériau composite souple suivant l'exemple 1, obtenue par enroulement à spires jointives de ce composite, sans aucune tension.

III — Pièce réalisée comme dans l'essai II, mais en appliquant pendant l'opération d'enroulement une tension de 2 daN sur le composite.

IV — Pièce réalisée comme l'essai III, mais où la couche comporte deux épaisseurs superposées de composite, la tension d'enroulement étant maintenue à 2 daN.

Pour mesurer les pressions d'éclatement des pièces obtenues suivant les quatre modes ainsi définis, on perce un trou à travers le corps (21) du vérin, et on le relie par l'intermédiaire d'un raccord (22) à une source de fluide sous pression. Dans l'alésage du corps coulisse librement un piston (24) muni d'un joint à lèvres (25).

Ce piston est, pour les besoins des essais d'éclatement, réalisé à demeure en acier.

On place l'ensemble constitué par le vérin en matière plastique et le piston en acier dans une cage indéformable formée par deux plateaux (26, 26') et deux colonnes (27, 27'). On interpose entre la tige du piston (24) et le plateau (26') un dynamomètre (28).

Les valeurs des pressions d'éclatement se déduisent des forces mesurées par la relation :

$$F = pS$$

Du fait de la valeur choisie pour l'alésage, la section S est de $2 \times 10^{-4}$ m$^2$.

Les valeurs moyennes trouvées pour la pression d'éclatement sont dans ces conditions les suivantes :

| Essai mode n° | Force d'éclatement (daN) | Pression d'éclatement (GPa) |
|---|---|---|
| I | 400 | 2 |
| II | 450 | 2,25 |
| III | 1000 | 5 |
| IV | 1100 | 5,5 |

On voit de la sorte très clairement le gain de résistance mécanique apporté par le matériau composite souple, surtout lorsqu'il est enroulé avec tension. Par ailleurs, étant donnée la petitesse du diamètre de bobinage, il est clair que seul un composite souple selon l'invention peut se prêter à cette opération.

**Revendications**

1. Matériau composite, employé notamment comme matière de renforcement, comprenant une mèche de fibres (33) continues enrobée de résine thermoplastique, caractérisé en ce qu'il est constitué d'une gaine souple (31) en matière thermoplastique recouvrant la mèche de fibres imprégnées de poudre de matière thermoplastique (32) dont le point de fusion est supérieur ou égal à celui du matériau de la gaine souple (31).

2. Matériau composite selon la revendication 1 caractérisé en ce que la gaine souple (31) est constituée par une matière choisie parmi les résines thermoplastiques.

3. Procédé de fabrication du matériau composite des revendications 1 à 2 consistant à enrober une mèche de fibres (33) continues d'une poudre de résine thermoplastique (32), caractérisé en ce qu'on gaine l'ensemble d'une matière thermoplastique dont le point de fusion est inférieur ou égal à celui de la poudre de matière thermoplastique (32) d'enrobage.

4. Procédé selon la revendication 3 caractérisé en ce que la matière thermoplastique en poudre est choisie dans le groupe comprenant les polyamides et copolyamides, les polyéthylènes, le polypropylène, le PVDF, les polyesters.

5. Procédé selon la revendication 3 caractérisé en ce que la matière thermoplastique de la gaine est choisie dans le groupe comprenant les polyamides et copolyamides, les polyéthylènes, le polypropylène, le PVDF, les polyesters.

6. Procédé selon l'une des revendications 3 à 5 caractérisé en ce que le gainage s'opère à une température inférieure au point de fusion de la poudre thermoplastique d'enrobage.

7. Procédé selon l'une des revendications 3 à 6 caractérisé en ce que la gaine souple de recouvrement est appliquée par extrusion.

8. Procédé suivant l'une quelconque des revendications 3 à 6, caractérisé en ce que la mèche contenant les grains de poudre est revêtue d'une gaine par passages successifs dans deux bains de monomères ou oligomères réagissant les uns sur les autres pour donner une matière thermoplastique.

**Claims**

1. Composite material, used particularly as a reinforcing material, comprising a core of continuous fibres (33) which is coated with thermoplastic resin, characterized in that it consists of a flexible sheath (31) of thermoplastic material covering the core of fibres which are impregnated with powdered thermoplastic material (32) whose melting point is higher than or equal to that of the material of the flexible sheath (31).

2. Composite material according to Claim 1, characterized in that the flexible sheath (31) consists of a material chosen from thermoplastic resins.

3. Process for the manufacture of the composite material of Claims 1 and 2, consisting in coating a core of continuous fibres (33) with a powdered thermoplastic resin (32), characterized in that the whole is sheathed with a thermoplastic material whose melting point is lower than or equal to that of the powdered thermoplastic material (32) used as coating.

4. Process according to Claim 3, characterized in that the powdered thermoplastic material is chosen from the group comprising polyamides and copolyamides, polyethylenes, polypropylene, PVDF and polyesters.

5. Process according to Claim 3, characterized in that the thermoplastic material of the sheath is chosen from the group comprising polyamides and copolyamides, polyethylenes, polypropylene, PVDF and polyesters.

6. Process according to one of Claims 3 to 5, characterized in that the sheathing is performed at a temperature below the melting point of the thermoplastic powder used as coating.

7. Process according to one of Claims 3 to 6, characterized in that the flexible covering sheath is applied by extrusion.

8. Process according to any one of Claims 3 to 6, characterized in that the core containing the grains of powder is coated with a sheath by successively passing through two baths of monomers or oligomers, the ones reacting with the others to produce a thermoplastic material.

**Patentansprüche**

1. Insbesondere als Verstärkungsmaterial verwendbarer Verbundwerkstoff aus einem mit einem thermoplastischen Harz ummantelten Strang von Endlosfasern (33), dadurch gekennzeichnet, daß er mit einem biegsamen Überzug (31) aus einem Thermoplasten versehen ist, der den Strang aus Fasern umhüllt, die in ein Pulver eines Thermoplasten (32) eingebettet sind, dessen Schmelzpunkt höher oder gleich dem des Materials des biegsamen Überzugs (31) ist.

2. Verbundwerkstoff nach Anspruch 1, dadurch gekennzeichnet, daß der biegsame Überzug (31) aus einer aus den thermoplastischen Harzen ausgewählten Substanz besteht.

3. Verfahren zur Herstellung eines Verbundwerkstoffs nach den Ansprüchen 1 bis 2 durch Einbetten eines Stranges von Endlosfasern (33) in ein pulverförmiges thermoplastisches Harz (32), dadurch gekennzeichnet, daß man das Ganze mit einem Thermoplasten umspritzt, dessen Schmelzpunkt kleiner oder gleich demjenigen des thermoplastischen Pulvers (32) zum Einbetten ist.

4. Verfahren nach Anspruch 3, dadurch gekennzeichnet, daß der pulverförmige thermoplastische Kunststoff aus der Gruppe der Polyamide und Copolyamide, der Polyethylene, des Polypropylens, PVDF, und der Polyester ausgewählt wird.

5. Verfahren nach Anspruch 3, dadurch gekennzeichnet, daß der Thermoplast des Überzugs aus der Gruppe der Polyamide und Copolyamide, der Polyethylene, des Polypropylens, PVDF und der Polyester ausgewählt wird.

6. Verfahren nach einem·der Ansprüche 3 bis 5, dadurch gekennzeichnet, daß das Umspritzen bei einer Temperatur unterhalb des Schmelzpunkts des thermoplastischen Pulvers für die Einbettung vorgenommen wird.

7. Verfahren nach einem der Ansprüche 3 bis 6, dadurch gekennzeichnet, daß die weiche Ummantelung des Überzugs durch Extrudieren aufgebracht wird.

8. Verfahren nach einem der Ansprüche 3 bis 6, dadurch gekennzeichnet, daß der die Pulverkörner enthaltende Faserstrang durch aufeinanderfolgende Durchgänge durch zwei Bäder von Monomeren oder Oligomeren, die jeweils unter Bildung eines Thermoplasten miteinander reagieren, mit dem Überzug versehen wird.

# FIG. 1

0 133 825

FIG. 2

# FIG.3

0 133 825

FIG. 4